# EUROPEAN PATENT APPLICATION

(11) **EP 4 773 483 A1**
(43) Date of publication of application: **08.07.2026**
(21) Application number: 24874365.0
(22) Date of filing: 19.08.2024
(51) Int. Cl.: H02K 9/19

(54) **VEHICLE DRIVE DEVICE**

(30) Priority: 04.10.2023 JP 2023173124
(71) Applicant: AISIN CORPORATION, Kariya-shi, Aichi 448-8650 (JP)
(72) Inventor: KOSHIDA, Takafumi, Kariya-shi, Aichi 448-8650 (JP); MURAKAMI, Satoshi, Kariya-shi, Aichi 448-8650 (JP); ISHIGURE, Kimihiro, Kariya-shi, Aichi 448-8650 (JP)
(74) Representative: Kramer Barske Schmidtchen Patentanwälte PartG mbB
(86) International application number: PCT/JP2024/029289
(87) International publication number: WO 2025/074751

(57) **Abstract**

A vehicle drive device includes a rotating electrical machine that includes a stator having a stator core, a tube member that is made of resin and covers at least an outer circumferential surface of the stator core, and a case that houses the rotating electrical machine and the tube member, and a refrigerant flow path through which a refrigerant for cooling the stator core flows is formed between the tube member and the case.

## Description

### TECHNICAL FIELD

The present invention relates to a vehicle drive device.

### BACKGROUND ART

Conventionally, there has been known a rotating electrical machine in which a refrigerant flow path through which a refrigerant for cooling a stator core flows is formed. Such a rotating electrical machine is disclosed in, for example, WO 2020/213052 A.

WO 2020/213052 A discloses a rotating electrical machine in which a coolant flow path (a refrigerant flow path) through which a coolant (a refrigerant) for cooling a stator core flows is formed. In the rotating electrical machine described in WO 2020/213052 A, a rotor and a stator including a stator core are housed in a housing (case). The housing has a double-wall structure including an inner housing and an outer housing in order to form the coolant flow path through which the coolant for cooling the stator core flows inside the housing.

### CITATION LIST

### PATENT LITERATURE

Patent Literature 1: WO 2020/213052 A

### SUMMARY OF INVENTION

### TECHNICAL PROBLEMS

However, in WO 2020/213052 A, since the housing (the case) has the double-wall structure including the inner housing and the outer housing in order to form the coolant flow path (the refrigerant flow path), the housing becomes relatively large and the structure of the housing becomes relatively complicated. Therefore, there is a demand for a configuration capable of forming a coolant flow path (a refrigerant flow path) through which a coolant (a refrigerant) for cooling a stator core flows while suppressing an increase in size of the housing (the case) and suppressing complication of the structure of the housing.

The present invention has been made to solve the above problems, and provides a vehicle drive device capable of forming a refrigerant flow path through which a refrigerant for cooling a stator core flows while suppressing an increase in size of a case and suppressing complication of the structure of the case.

### SOLUTIONS TO PROBLEMS

In order to achieve the above object, a vehicle drive device according to one aspect of the present invention includes a rotating electrical machine that includes a rotor and a stator disposed so as to face an outer circumferential surface of the rotor and having a stator core and that functions as a driving power source for a wheel, a tube member that is made of resin and covers at least an outer circumferential surface of the stator core, and a case that houses the rotating electrical machine and the tube member, and a refrigerant flow path through which a refrigerant for cooling the stator core flows is formed between the tube member and the case.

As described above, the vehicle drive device according to one aspect of the present invention includes the rotating electrical machine that includes the stator having the stator core, the tube member that is made of resin and covers at least the outer circumferential surface of the stator core, and the case that houses the rotating electrical machine and the tube member, and the refrigerant flow path through which the refrigerant for cooling the stator core flows is formed between the tube member and the case. Since the outer circumferential surface of the stator core and the refrigerant flow path are adjacent to each other with the tube member, which is made of resin, interposed therebetween, the refrigerant flow path can be formed without forming the case so as to have a double-wall structure. As a result, it is possible to form the refrigerant flow path through which the refrigerant for cooling the stator core flows while suppressing the increase in size of the case and suppressing the complication of the structure of the case. Note that, in general, the tube member made of resin does not transmit liquid even in a case where the tube member has a very small thickness (for example, in the order of µm). Therefore, even if the tube member is made of resin having a very low thermal conductivity compared to metal or the like, by using the tube member made of resin having a very small thickness (for example, in the order of µm), the stator core can be sufficiently cooled by the refrigerant flowing through the refrigerant flow path.

In the vehicle drive device according to the one aspect, preferably, the tube member covers at least one of an end face on one side and an end face on the other side in an axial direction of the stator core, in addition to the outer circumferential surface of the stator core.

With this configuration, as compared with a case where the tube member covers only the outer circumferential surface of the stator core, it is possible to improve the sealability between the stator core and the refrigerant flow path by the tube member.

In the configuration in which the tube member covers at least one of the end face on one side and the end face on the other side in the axial direction of the stator core in addition to the outer circumferential surface of the stator core, preferably, the tube member covers the end face on one side in the axial direction of the stator core in addition to the outer circumferential surface of the stator core, and the vehicle drive device further includes a seal member that seals a gap between the case and a one side covering portion of the tube member that covers an end face on one side in the axial direction of the stator core.

With this configuration, the seal member seals the gap between the case and the one side covering portion of the tube member that covers the end face on one side in the axial direction of the stator core, so that the sealability between the stator core and the refrigerant flow path by the tube member can be further improved.

In the vehicle drive device according to the one aspect, the tube member is preferably a tube member having heat shrinkability.

With this configuration, the tube member can be brought into close contact with at least the outer circumferential surface of the stator core by applying heat to the tube member to shrink the tube member. As a result, as compared with a case where the tube member is a tube member not having heat shrinkability, the cooling performance of the refrigerant via the tube member that covers the outer circumferential surface of the stator core can be improved.

Note that, in the present application, in the vehicle drive device according to the one aspect, the following configurations are also conceived.

### (Supplement 1)

In the vehicle drive device according to the one aspect, preferably, the stator core includes a fastening protrusion including a core through-hole through which a fastening member for fixing the stator core to the case passes and protruding toward the outer circumferential side, and the tube member covers the outer circumferential surface of the stator core also including the outer circumferential surface of the fastening protrusion.

With this configuration, it is possible to form the refrigerant flow path through which the refrigerant for cooling the stator core including the fastening protrusion flows while suppressing the increase in size of the case and suppressing the complication of the structure of the case.

### (Supplement 2)

In the configuration including the seal member that seals the gap between the case and the one side covering portion of the tube member, preferably, a first seal member groove for disposing the seal member is formed in a portion of the case facing the one side covering portion of the tube member, and an O-ring as the seal member is disposed in the first seal member groove.

With this configuration, it is possible to easily seal the gap between the case and the one side covering portion of the tube member by the O-ring as the seal member disposed in the first seal member groove.

### (Supplement 3)

In the configuration including the seal member that seals the gap between the case and the one side covering portion of the tube member, preferably, the tube member covers the end face on the other side in the axial direction of the stator core in addition to the outer circumferential surface of the stator core and the end face on one side in the axial direction of the stator core, and a lip seal member as the seal member obtained by vulcanizing and fusing a resin member having a tongue-shaped distal end portion to a metal plate-shaped member is disposed in a portion facing the one side covering portion of the tube member that covers the end face on one side in the axial direction of the stator core in a space including the refrigerant flow path between the case and the tube member.

With this configuration, it is possible to easily seal the gap between the case and the one side covering portion of the tube member by the lip seal member as the seal member disposed in the portion facing the one side covering portion of the tube member in the space including the refrigerant flow path between the case and the tube member. In this case, it is not necessary to form a seal member groove in the case, and thus the manufacturing process of the case can be simplified.

### (Supplement 4)

In the configuration including the seal member that seals the gap between the case and the one side covering portion of the tube member, preferably, an annular plate-shaped member that is disposed on the end face side on the other side in the axial direction of the stator core and forms the refrigerant flow path together with the tube member and the case is further included, a second seal member groove for disposing the seal member is formed in a portion of the plate-shaped member facing the other side covering portion of the tube member that covers the end face on the other side in the axial direction, a third seal member groove for disposing the seal member is formed in a portion of the plate-shaped member facing the case, and a second O-ring and a third O-ring as the seal members are arranged in the second seal member groove and the third seal member groove, respectively.

With this configuration, it is possible to easily seal the gap between the plate-shaped member and the other side covering portion of the tube member by the second O-ring as the seal member disposed in the second seal member groove. Furthermore, it is possible to easily seal the gap between the plate-shaped member and the case by the third O-ring as the seal member disposed in the third seal member groove.

### (Supplement 5)

Preferably, the vehicle drive device according to the one aspect further includes an annular plate-shaped member that is disposed on the end face side on the other side in the axial direction of the stator core, has a fastening through-hole through which the fastening member for fixing the stator core to the case passes, and forms the refrigerant flow path together with the tube member and the case, and the stator core is fixed to the case by being fastened to the case by the fastening member in a state where the plate-shaped member is disposed on the end face side on the other side in the axial direction of the stator core such that the refrigerant flow path is formed.

With this configuration, the stator core can be easily fixed to the case while the annular plate-shaped member that is disposed on the end face side on the other side in the axial direction of the stator core forms the refrigerant flow path together with the tube member and the case. In addition, since the stator core is fixed to the case by being fastened to the case by the fastening member, compressive stress is not applied to the stator core as compared with a case where the stator core is fixed to the case by being shrink-fitted to the case. Therefore, an increase in iron loss (energy loss) due to the compressive stress applied to the stator core can be suppressed during the rotation of the rotor, so that a decrease in energy efficiency can be suppressed.

### ADVANTAGEOUS EFFECTS OF INVENTION

According to the present invention, it is possible to provide the vehicle drive device capable of forming the refrigerant flow path through which the refrigerant for cooling the stator core flows while suppressing the increase in size of the case and suppressing the complication of the structure of the case.

### BRIEF DESCRIPTION OF DRAWINGS

FIG. 1 is a cross-sectional view illustrating a vehicle drive device according to a first embodiment of the present invention.
FIG. 2 is a cross-sectional view taken along line 920-920 in FIG. 1.
FIG. 3 is an enlarged cross-sectional view of the periphery of a cooling water flow path illustrated in FIG. 1.
FIG. 4 is a cross-sectional view taken along line 930-930 in FIG. 1.
FIG. 5 is an enlarged cross-sectional view illustrating the periphery of a cooling water flow path in a vehicle drive device according to a second embodiment of the present invention.
FIG. 6 is an enlarged cross-sectional view illustrating the periphery of a cooling water flow path in a vehicle drive device according to a modification of the present invention.

### DESCRIPTION OF EMBODIMENTS

Hereinafter, embodiments of the present invention will be described with reference to the drawings.

### [First Embodiment]

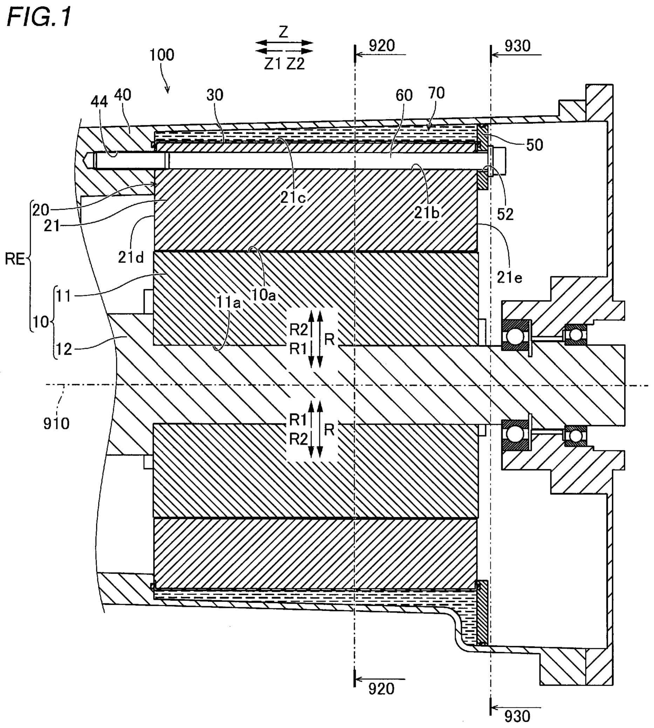

A configuration of a vehicle drive device 100 according to a first embodiment of the present invention will be described with reference to FIGS. 1 to 4. The vehicle drive device 100 is a drive device used for, for example, an electric car, a hybrid car, and the like.

### (Overall Configuration of Vehicle Drive Device)

As illustrated in FIG. 1, the vehicle drive device 100 includes a rotating electrical machine RE including a rotor 10 and a stator 20, a tube member 30, a case 40, and a plate-shaped member 50. The rotating electrical machine RE is, for example, a motor, a generator, or a motor/generator. The rotating electrical machine RE functions as a driving power source for wheels.

In the following description, the axial direction, the radial direction, and the circumferential direction of the rotor 10 (see FIG. 1) and the stator 20 (see FIG. 1) included in the rotating electrical machine RE are defined as a Z direction, an R direction, and a C direction, respectively. In addition, one side and the other side in the axial direction (the Z direction) are defined as a Z1 side and a Z2 side, respectively. Furthermore, the inner side (the inner circumferential side) and the outer side (the outer circumferential side) in the radial direction (the R direction) are defined as an R1 side and an R2 side, respectively.

### <Configuration of Rotor>

As illustrated in FIG. 1, the rotor 10 includes a rotor core 11 and a rotor shaft 12. The rotor core 11 is formed in an annular shape. The rotor core 11 is formed by stacking a plurality of electromagnetic steel sheets. When viewed from the Z direction, a shaft insertion hole 11a extending in the Z direction is formed in the central portion of the rotor core 11. The rotor shaft 12 is fixed to the rotor core 11 in a state of being inserted into the shaft insertion hole 11a. The rotor 10 and the rotor shaft 12 are configured to be rotatable about a center axis 910 along the Z direction.

### <Configuration of Stator>

As illustrated in FIG. 1, the stator 20 is disposed on the R2 side of the rotor 10 so as to face an outer circumferential surface 10a of the rotor 10 (the rotor core 11). That is, the rotating electrical machine RE is an inner rotor type rotating electrical machine. The stator 20 includes a stator core 21 and a coil (not illustrated). The stator core 21 is formed in an annular shape. The stator core 21 is formed by stacking a plurality of electromagnetic steel sheets. The coil (not illustrated) is wound around the stator core 21.

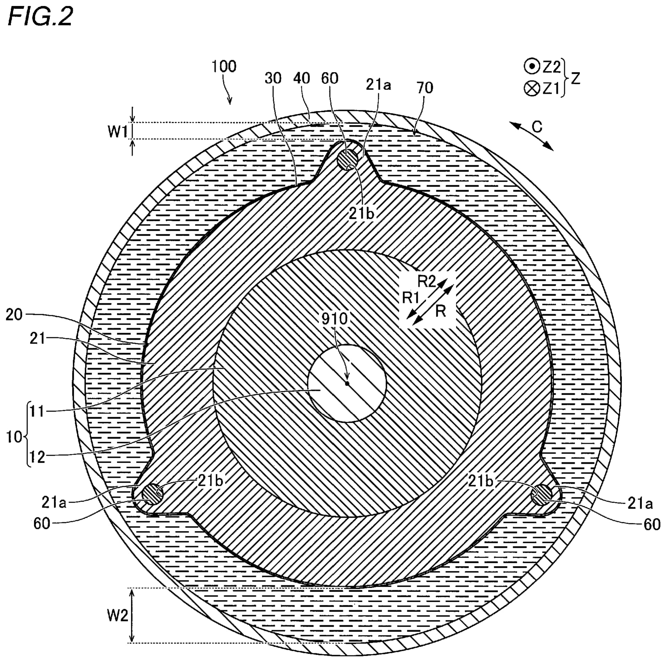

As illustrated in FIG. 2, the stator core 21 includes a fastening protrusion 21a protruding to the outer circumferential side (the R2 side). A core through-hole 21b is formed in the fastening protrusion 21a. As illustrated in FIG. 1, a fastening member 60 for fixing the stator core 21 to the case 40 passes through the core through-hole 21b. Note that FIG. 1 illustrates an example in which the fastening member 60 is a bolt.

### <Configuration of Tube Member>

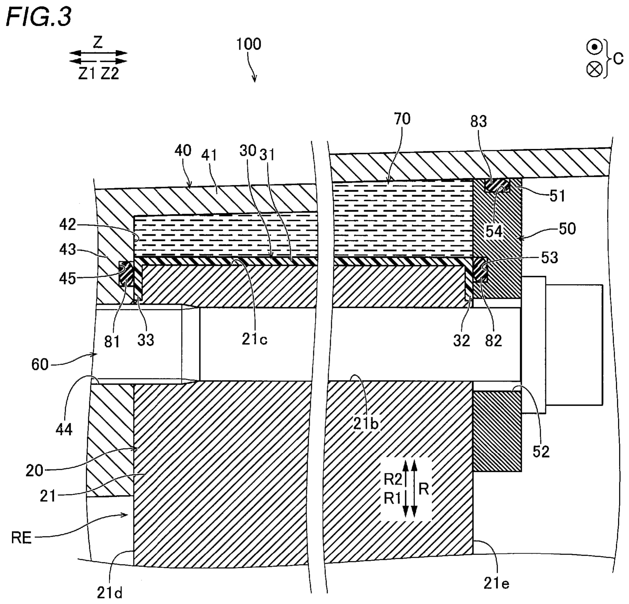

As illustrated in FIG. 3, the tube member 30 covers an end face 21d on one side (the Z1 side) and an end face 21e on the other side (the Z2 side) in the axial direction (the Z direction) of the stator core 21, in addition to an outer circumferential surface 21c of the stator core 21. Specifically, the tube member 30 covers the entire outer circumferential surface 21c of the stator core 21 including the outer circumferential surface of the fastening protrusion 21a. In addition, the tube member 30 covers a portion on the R2 side of the end face 21d on the Z1 side of the stator core 21. Furthermore, the tube member 30 covers a portion on the R2 side of the end face 21e on the Z2 side of the stator core 21.

The tube member 30 is made of resin. The tube member 30 is a tube member having heat shrinkability. The tube member 30 preferably has a continuous use temperature (a long-term heat-resistant temperature) of 200°C or higher. The tube member 30 has a thickness of at least less than 1000 µm, and preferably has a thickness of 20 µm or more and 500 µm or less. The tube member 30 is, for example, a fluororesin PFA (Per Fluoro Alkoxy polymer), a fluororesin FEP (Fluorinated Ethylene Propylene), or the like.

### <Configuration of Case>

As illustrated in FIG. 1, the case 40 houses the rotating electrical machine RE and the tube member 30. The case 40 is made of metal such as aluminum. A cooling water flow path 70 is formed between the tube member 30 and the case 40. Specifically, as illustrated in FIG. 3, the cooling water flow path 70 is formed between an outer circumferential surface covering portion 31 of the tube member 30 that covers the outer circumferential surface 21c of the stator core 21 and a tube member facing portion 41 of the case 40 that faces, in the R direction, the outer circumferential surface covering portion 31 of the tube member 30. Cooling water for cooling the stator core 21 flows through the cooling water flow path 70. The cooling water is, for example, a liquid containing a component having an antifreeze effect. Note that the cooling water flow path 70 and the cooling water are examples of "refrigerant flow path" and "refrigerant", respectively, in the claims.

As illustrated in FIG. 2, the cooling water flow path 70 is formed in an annular shape. In the C direction, the width W1 of a portion of the cooling water flow path 70 including the fastening protrusion 21a of the stator core 21 is smaller than the width W2 of a portion of the cooling water flow path 70 not including the fastening protrusion 21a of the stator core 21.

### <Configuration of Plate-Shaped Member>

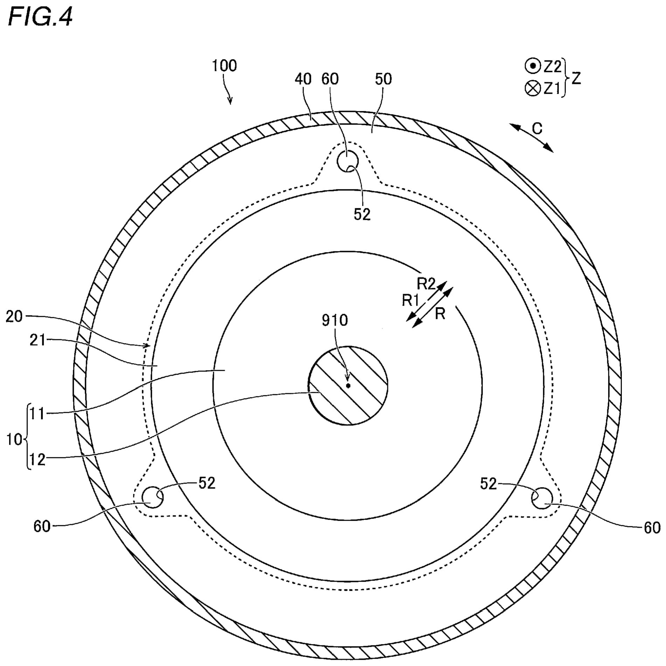

As illustrated in FIG. 1, the plate-shaped member 50 is disposed on the end face 21e side on the other side (the Z2 side) in the axial direction (the Z direction) of the stator core 21. As illustrated in FIG. 4, the plate-shaped member 50 is formed in an annular shape. As illustrated in FIG. 3, the plate-shaped member 50 forms the cooling water flow path 70 together with the tube member 30 and the case 40. Specifically, the plate-shaped member 50 is in contact with an other side covering portion 32 of the tube member 30 that coves the end face 21e on the Z2 side of the stator core 21 and a portion not covered by the tube member 30 of the end face 21e on the Z2 side of the stator core 21. The plate-shaped member 50 is formed to extend in the R direction. An end portion 51 on the R2 side of the plate-shaped member 50 is in contact with the case 40. That is, the end portion on the Z2 side of the cooling water flow path 70 formed by the outer circumferential surface covering portion 31 of the tube member 30 and the tube member facing portion 41 of the case 40 is closed by the plate-shaped member 50. Note that the end portion on the Z1 side of the cooling water flow path 70 formed by the outer circumferential surface covering portion 31 of the tube member 30 and the tube member facing portion 41 of the case 40 is closed by an one side covering portion 33 of the tube member 30 that covers the end face 21d on the Z1 side of the stator core 21 coming into contact with a surface 42 of the case 40 that extends along an RC plane.

The plate-shaped member 50 has a fastening through-hole 52 through which the fastening member 60 for fixing the stator core 21 to the case 40 passes. The stator core 21 is fixed to the case 40 by being fastened to the case 40 by the fastening member 60 in a state where the plate-shaped member 50 is disposed on the end face 21e side on the other side (the Z2 side) in the axial direction (the Z direction) of the stator core 21 so as to form the cooling water flow path 70. Specifically, a fastening hole 44 into which the distal end portion of the fastening member 60 is inserted is formed in a portion 43 of the case 40 disposed on the Z1 side of the stator core 21, the portion 43 having the surface 42 extending along the RC plane. A female screw that engages with a male screw formed at the distal end portion of the fastening member 60 is formed in the fastening hole 44. When viewed from the Z direction, the portion 43 of the case 40, the stator core 21, and the plate-shaped member 50 are arranged in this order from the Z1 side toward the Z2 side such that the fastening hole 44 of the case 40, the core through-hole 21b of the stator core 21, and the fastening through-hole 52 of the plate-shaped member 50 overlap each other. The fastening member 60 then passes through the fastening through-hole 52 of the plate-shaped member 50 and the core through-hole 21b of the stator core 21 from the Z2 side of the plate-shaped member 50. The male screw formed at the distal end portion of the fastening member 60 is then engaged with the female screw formed in the fastening hole 44 of the case 40.

### (Sealing Structure of Cooling Water Flow Path)

As illustrated in FIG. 3, the vehicle drive device 100 includes a seal member that seals the gap between the case 40 and the one side covering portion 33 of the tube member 30. Specifically, a first seal member groove 45 for disposing the seal member is formed in a portion of the case 40 facing the one side covering portion 33. A first O-ring 81 as the seal member is disposed in the first seal member groove 45.

The vehicle drive device 100 includes a seal member that seals the gap between the plate-shaped member 50 and the other side covering portion 32 of the tube member 30. Specifically, a second seal member groove 53 for disposing the seal member is formed in a portion of the plate-shaped member 50 facing the other side covering portion 32 of the tube member 30. A second O-ring 82 as the seal member is disposed in the second seal member groove 53.

The vehicle drive device 100 includes a seal member that seals the gap between the plate-shaped member 50 and the case 40. Specifically, a third seal member groove 54 for disposing the seal member is formed in a portion of the plate-shaped member 50 facing the case 40 (a portion of the plate-shaped member 50 in contact with the case 40). A third O-ring 83 as the seal member is disposed in the third seal member groove 54.

### (Effects of First Embodiment)

The first embodiment can obtain the following effects.

In the first embodiment, the vehicle drive device 100 includes the rotating electrical machine RE that includes the stator 20 having the stator core 21, the tube member 30 that is made of resin and covers at least the outer circumferential surface 21c of the stator core 21, and the case 40 that houses the rotating electrical machine RE and the tube member 30, and the cooling water flow path 70 through which the cooling water for cooling the stator core 21 flows is formed between the tube member 30 and the case 40. Since the outer circumferential surface 21c of the stator core 21 and the cooling water flow path 70 are adjacent to each other with the tube member 30, which is made of resin, interposed therebetween, the cooling water flow path 70 can be formed without forming the case 40 so as to have the double-wall structure. As a result, it is possible to form the cooling water flow path 70 through which the cooling water for cooling the stator core 21 flows while suppressing the increase in size of the case 40 and suppressing the complication of the structure of the case 40. Note that, in general, the tube member 30 made of resin does not transmit liquid even in a case where the tube member has a very small thickness (for example, in the order of µm). Therefore, even if the tube member 30 is made of resin having a very low thermal conductivity compared to metal or the like, by using the tube member 30 made of resin having a very small thickness (for example, in the order of µm), the stator core 21 can be sufficiently cooled by the cooling water flowing through the cooling water flow path 70.

Furthermore, in the first embodiment, the tube member 30 covers the end face 21d on one side (the Z1 side) and the end face 21e on the other side (the Z2 side) in the axial direction (the Z direction) of the stator core 21, in addition to the outer circumferential surface 21c of the stator core 21. As a result, as compared with a case where the tube member 30 covers only the outer circumferential surface 21c of the stator core 21, it is possible to improve the sealability between the stator core 21 and the cooling water flow path 70 by the tube member 30.

Moreover, in the first embodiment, the vehicle drive device 100 includes the seal member (the first O-ring 81) that seals the gap between the case 40 and the one side covering portion 33 of the tube member 30 that covers the end face 21d on one side (the Z1 side) in the axial direction (the Z direction) of the stator core 21. As a result, the seal member (the first O-ring 81) seals the gap between the case 40 and the one side covering portion 33 of the tube member 30 that covers the end face 21d on one side (the Z1 side) in the axial direction (the Z direction) of the stator core 21, so that the sealability between the stator core 21 and the cooling water flow path 70 by the tube member 30 can be further improved.

Furthermore, in the first embodiment, the tube member 30 is a tube member having heat shrinkability. Therefore, the tube member 30 can be brought into close contact with at least the outer circumferential surface 21c of the stator core 21 by applying heat to the tube member 30 to shrink the tube member 30. As a result, as compared with a case where the tube member 30 is a tube member not having heat shrinkability, the cooling performance of the cooling water via the tube member 30 that covers the outer circumferential surface 21c of the stator core 21 can be improved.

In addition, in the first embodiment, the stator core 21 includes the fastening protrusion 21a in which the core through-hole 21b through which the fastening member 60 for fixing the stator core 21 to the case 40 passes is formed and that protrudes to the outer circumferential side (the R2 side). The tube member 30 covers the outer circumferential surface 21c of the stator core 21 including the outer circumferential surface of the fastening protrusion 21a. As a result, it is possible to form the cooling water flow path 70 through which the cooling water for cooling the stator core 21 including the fastening protrusion 21a flows while suppressing the increase in size of the case 40 and suppressing the complication of the structure of the case 40.

Furthermore, in the first embodiment, the first seal member groove 45 for disposing a seal member is formed in a portion of the case 40 facing the one side covering portion 33 of the tube member 30. The first O-ring 81 as the seal member is disposed in the first seal member groove 45. As a result, it is possible to easily seal the gap between the case 40 and the one side covering portion 33 of the tube member 30 by the first O-ring 81 as the seal member disposed in the first seal member groove 45.

Moreover, in the first embodiment, the vehicle drive device 100 includes the annular plate-shaped member 50 that is disposed on the end face 21e side on the other side (the Z2 side) in the axial direction (the Z direction) of the stator core 21 and forms the cooling water flow path 70 together with the tube member 30 and the case 40. The second seal member groove 53 for disposing a seal member is formed in a portion of the plate-shaped member 50 facing the other side covering portion 32 of the tube member 30 that covers the end face 21e on the other side (the Z2 side) in the axial direction (the Z direction). In addition, the third seal member groove 54 for disposing a seal member is formed in a portion of the plate-shaped member 50 facing the case 40. The second O-ring 82 and the third O-ring 83 as the seal members are arranged in the second seal member groove 53 and the third seal member groove 54, respectively. As a result, it is possible to easily seal the gap between the plate-shaped member 50 and the other side covering portion 32 of the tube member 30 by the second O-ring 82 as the seal member disposed in the second seal member groove 53. Furthermore, it is possible to easily seal the gap between the plate-shaped member 50 and the case 40 by the third O-ring 83 as the seal member disposed in the third seal member groove 54.

Moreover, in the first embodiment, the vehicle drive device 100 includes the annular plate-shaped member 50 that is disposed on the end face 21e side on the other side (the Z2 side) in the axial direction (the Z direction) of the stator core 21, has the fastening through-hole 52 through which the fastening member 60 for fixing the stator core 21 to the case 40 passes, and forms the cooling water flow path 70 together with the tube member 30 and the case 40. The stator core 21 is fixed to the case 40 by being fastened to the case 40 by the fastening member 60 in a state where the plate-shaped member 50 is disposed on the end face 21e side on the other side (the Z2 side) in the axial direction (the Z direction) of the stator core 21 so as to form the cooling water flow path 70. As a result, the stator core 21 can be easily fixed to the case 40 while the annular plate-shaped member 50 that is disposed on the end face 21e side on the other side (the Z2 side) in the axial direction (the Z direction) of the stator core 21 forms the cooling water flow path 70 together with the tube member 30 and the case 40. In addition, since the stator core 21 is fixed to the case 40 by being fastened to the case 40 by the fastening member 60, compressive stress is not applied to the stator core 21 as compared with a case where the stator core 21 is fixed to the case 40 by being shrink-fitted to the case 40. Therefore, an increase in iron loss (energy loss) due to the compressive stress applied to the stator core 21 can be suppressed during the rotation of the rotor 10, so that a decrease in energy efficiency can be suppressed.

### [Second Embodiment]

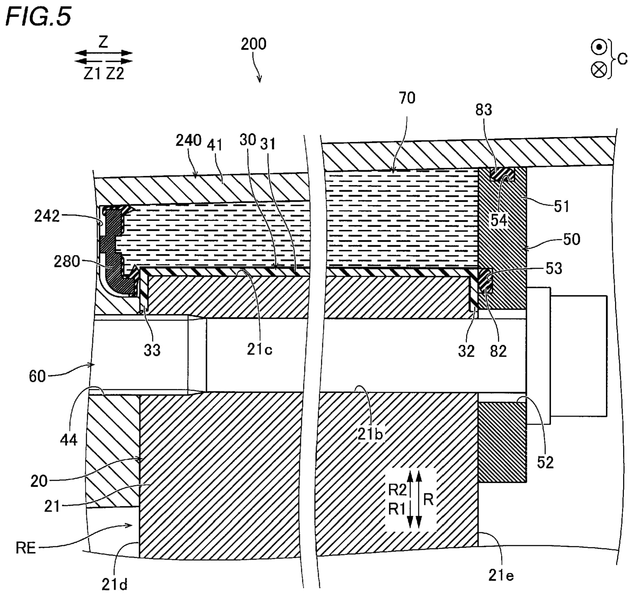

A configuration of a vehicle drive device 200 according to a second embodiment of the present invention will be described with reference to FIG. 5. In the drawing, the same reference numerals are given to the same parts as those of the first embodiment.

### (Overall Configuration of Vehicle Drive Device)

As illustrated in FIG. 5, the vehicle drive device 200 includes the rotating electrical machine RE including the rotor 10 and the stator 20, the tube member 30, a case 240, and the plate-shaped member 50.

As in the first embodiment, the tube member 30 covers the end face 21d on one side (the Z1 side) and the end face 21e on the other side (the Z2 side) in the axial direction (the Z direction) of the stator core 21, in addition to the outer circumferential surface 21c of the stator core 21.

As in the first embodiment, the case 240 houses the rotor 10 and the stator 20. As in the first embodiment, the cooling water flow path 70 is formed between the tube member 30 and the case 240. Cooling water for cooling the stator core 21 flows through the cooling water flow path 70.

### (Sealing Structure of Cooling Water Flow Path)

A lip seal member 280 as a seal member obtained by vulcanizing and fusing a resin member having a tongue-shaped distal end portion to a metal plate-shaped member is disposed in a portion facing the one side covering portion 33 of the tube member 30 that covers the end face 21d on one side (the Z1 side) in the axial direction (the Z direction) of the stator core 21 in the space including the cooling water flow path 70 between the case 240 and the tube member 30. Note that the space for disposing the lip seal member 280 is required in the portion facing the one side covering portion 33 of the tube member 30, a Z1-side end face 242 of the space including the cooling water flow path 70 between the case 240 and the tube member 30 is separated from the Z1-side end face 21d of the stator core 21.

Note that other configurations of the vehicle drive device 200 according to the second embodiment are similar to those of the vehicle drive device 100 according to the first embodiment.

### (Effects of Second Embodiment)

The second embodiment can obtain the following effects.

In the second embodiment, the vehicle drive device 200 includes the rotating electrical machine RE that includes the stator 20 having the stator core 21, the tube member 30 that is made of resin and covers at least the outer circumferential surface 21c of the stator core 21, and the case 240 that houses the rotating electrical machine RE and the tube member 30, and the cooling water flow path 70 through which the cooling water for cooling the stator core 21 flows is formed between the tube member 30 and the case 240. As in the first embodiment, since the outer circumferential surface 21c of the stator core 21 and the cooling water flow path 70 are adjacent to each other with the tube member 30, which is made of resin, interposed therebetween, the cooling water flow path 70 can be formed without forming the case 240 so as to have the double-wall structure. As a result, as in the first embodiment, it is possible to form the cooling water flow path 70 through which the cooling water for cooling the stator core 21 flows while suppressing the increase in size of the case 240 and suppressing the complication of the structure of the case 240.

Furthermore, in the second embodiment, as described above, the lip seal member 280 as the seal member obtained by vulcanizing and fusing a resin member having a tongue-shaped distal end portion to a metal plate-shaped member is disposed in a portion facing the one side covering portion 33 of the tube member 30 that covers the end face 21d on one side (the Z1 side) in the axial direction (the Z direction) of the stator core 21 in the space including the cooling water flow path 70 between the case 240 and the tube member 30. As a result, it is possible to easily seal the gap between the case 240 and the one side covering portion 33 of the tube member 30 by the lip seal member 280 as the seal member disposed in the portion facing the one side covering portion 33 of the tube member 30 in the space including the cooling water flow path 70 between the case 240 and the tube member 30. In this case, it is not necessary to form a seal member groove for disposing the seal member in the case 240, and thus the manufacturing process of the case 240 can be simplified.

Note that other effects of the second embodiment are the similar to those of the first embodiment.

### [Modifications]

Note that it should be understood that the embodiments disclosed herein are illustrative in all respects and are not restrictive. The scope of the present invention is defined not by the description of the above embodiments but by the claims, and further includes all changes (modifications) within the meaning and scope equivalent to the claims.

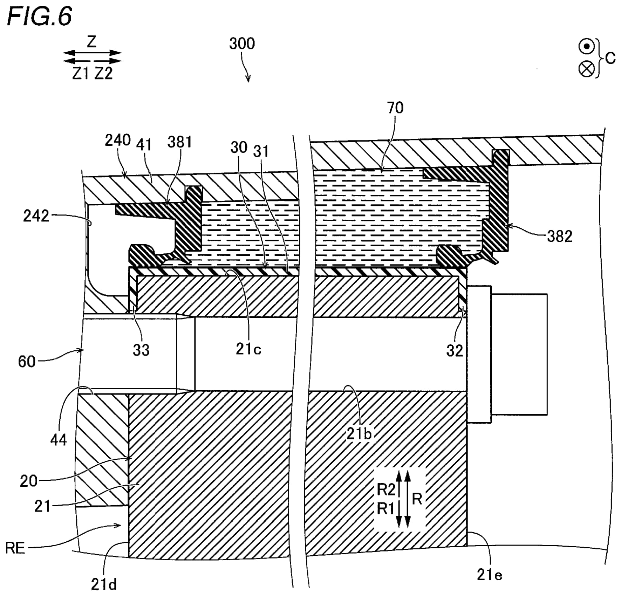

For example, the first and second embodiments have described the example in which the vehicle drive device 100 (200) includes the annular plate-shaped member 50 that is disposed on the end face 21e side on the other side (the Z2 side) in the axial direction (the Z direction) of the stator core 21, has the fastening through-hole 52 through which the fastening member 60 for fixing the stator core 21 to the case 40 (240) passes, and forms the cooling water flow path 70 together with the tube member 30 and the case 40 (240), and the stator core 21 is fixed to the case 40 (240) by being fastened to the case 40 (240) by the fastening member 60 in a state where the plate-shaped member 50 is disposed on the end face 21e side on the other side (the Z2 side) in the axial direction (the Z direction) of the stator core 21 such that the cooling water flow path 70 is formed, but the present invention is not limited thereto. In the present invention, as in a modification illustrated in FIG. 6, a vehicle drive device 300 need not to include the annular plate-shaped member 50 as in the vehicle drive device 100 (200), and the stator core 21 may be fixed to the case 240 without being fastened to the case 240 by the fastening member 60. As illustrated in FIG. 6, the vehicle drive device 300 includes a seal member 381 disposed near a Z1-side end portion of the cooling water flow path 70 formed by the outer circumferential surface covering portion 31 of the tube member 30 and the tube member facing portion 41 of the case 240, and a seal member 382 disposed at a Z2-side end portion of the cooling water flow path 70 formed by the outer circumferential surface covering portion 31 of the tube member 30 and the tube member facing portion 41 of the case 240.

Furthermore, the first and second embodiments have described the example in which the vehicle drive device 100 (200) includes the annular plate-shaped member 50 that is disposed on the end face 21e side on the other side (the Z2 side) in the axial direction (the Z direction) of the stator core 21 and forms the cooling water flow path 70 together with the tube member 30 and the case 40 (240), the second seal member groove 53 for disposing the seal member is formed in a portion of the plate-shaped member 50 facing the other side covering portion 32 of the tube member 30 that covers the end face 21e on the other side (the Z2 side) in the axial direction (the Z direction), the third seal member groove 54 for disposing the seal member is formed in a portion of the plate-shaped member 50 facing the case 40 (240), and the second O-ring 82 and the third O-ring 83 as seal members are arranged in the second seal member groove 53 and the third seal member groove 54, respectively, but the present invention is not limited thereto. In the present invention, as in the modification illustrated in FIG. 6, the vehicle drive device 300 need not to include the annular plate-shaped member 50 as in the vehicle drive device 100 (200).

Furthermore, the first and second embodiments have described the example in which the stator core 21 includes the fastening protrusion 21a including the core through-hole 21b through which the fastening member 60 for fixing the stator core 21 to the case 40 (240) passes and protruding toward the outer circumferential side (the R2 side), and the tube member 30 covers the outer circumferential surface 21c of the stator core 21 also including the outer circumferential surface of the fastening protrusion 21a, but the present invention is not limited thereto. In the present invention, the stator core 21 need not to include the fastening protrusion 21a, and the tube member 30 may cover the outer circumferential surface 21c of the stator core 21 that does not include the fastening protrusion 21a.

Moreover, the first and second embodiments have described the example in which the tube member 30 is a tube member having heat shrinkability, but the present invention is not limited thereto. In the present invention, the tube member 30 may be a tube member not having heat shrinkability.

Furthermore, the first and second embodiments have described the example in which the vehicle drive device 100 (200) includes the seal member (the first O-ring 81) that seals the gap between the case 40 (240) and the one side covering portion 33 of the tube member 30 that covers the end face 21d on one side (the Z1 side) in the axial direction (the Z direction) of the stator core 21, but the present invention is not limited thereto. In the present invention, the vehicle drive device 100 (200) need not to include the seal member (the first O-ring 81) that seals the gap between the case 40 (240) and the one side covering portion 33 of the tube member 30 that covers the end face 21d on one side (the Z1 side) in the axial direction (the Z direction) of the stator core 21.

Furthermore, the first and second embodiments have described the example in which the tube member 30 covers the end face 21d on one side (the Z1 side) and the end face 21e on the other side (the Z2 side) in the axial direction (the Z direction) of the stator core 21, in addition to the outer circumferential surface 21c of the stator core 21, but the present invention is not limited thereto. In the present invention, the tube member 30 may cover only one of the end face 21d on one side (the Z1 side) and the end face 21e on the other side (the Z2 side) in the axial direction (the Z direction) of the stator core 21, in addition to the outer circumferential surface 21c of the stator core 21. In addition, the tube member 30 may cover the outer circumferential surface 21c of the stator core 21, and at the same time, need not to cover the end face 21d on one side (the Z1 side) and the end face 21e on the other side (the Z2 side) in the axial direction (the Z direction) of the stator core 21.

Moreover, the first and second embodiments have described the example in which "refrigerant" in the claims is cooling water, but the present invention is not limited thereto. In the present invention, "refrigerant" in the claims may be a refrigerant other than the cooling water (for example, a refrigerant used in an air conditioner).

### REFERENCE SIGNS LIST

10: Rotor, 10a: Outer circumferential surface of the rotor, 20: Stator, 21: Stator core, 21c: Outer circumferential surface of the stator core, 21d: End face on one side in the axial direction of the stator core, 30: Tube member, 33: One side covering portion, 40, 240: Case, 70: Cooling water flow path (refrigerant flow path), 100, 200, 300: Vehicle drive device, and Rotating electrical machine: RE

## Claims

1. A vehicle drive device comprising:
a rotating electrical machine that includes a rotor and a stator disposed so as to face an outer circumferential surface of the rotor and having a stator core and that functions as a driving power source for a wheel;
a tube member that is made of resin and covers at least an outer circumferential surface of the stator core; and
a case that houses the rotating electrical machine and the tube member, wherein
a refrigerant flow path through which a refrigerant for cooling the stator core flows is formed between the tube member and the case.

2. The vehicle drive device according to claim 1, wherein the tube member covers at least one of an end face on one side and an end face on the other side in an axial direction of the stator core, in addition to the outer circumferential surface of the stator core.

3. The vehicle drive device according to claim 2, wherein the tube member covers an end face on one side in the axial direction of the stator core in addition to the outer circumferential surface of the stator core, and
the vehicle drive device further comprising a seal member that seals a gap between the case and a one side covering portion of the tube member that covers an end face on one side in the axial direction of the stator core.

4. The vehicle drive device according to claim 1, wherein the tube member is a tube member having heat shrinkability.
